# EUROPÄISCHE PATENTSCHRIFT

(11) **EP 1 923 589 B1**
(45) Veröffentlichungstag und Bekanntmachung des Hinweises auf die Patenterteilung: **01.08.2012**
(21) Anmeldenummer: 07021159.4
(22) Anmeldetag: 30.10.2007
(51) Int. Cl.: F16D 3/76

(54) **Elastische Wellenkupplung**
Elastic shaft coupling
Accouplement d'arbre élastique

(30) Priorität: 08.11.2006 DE 202006017160 U
(43) Veröffentlichungstag der Anmeldung: 21.05.2008
(73) Patentinhaber: Centa-Antriebe Kirschey GmbH, 42781 Haan (DE)
(72) Erfinder: Kirschey, Gerhard, 42329 Wuppertal (DE)
(74) Vertreter: Roche, von Westernhagen & Ehresmann

(56) Entgegenhaltungen:
- GB-A- 1 352 565
- GB-A- 2 062 807

## Beschreibung

Die Erfindung betrifft gemäß Oberbegriff des Anspruchs 1 eine hoch drehelastische Wellenkupplung für radialen Kraftfluss mit einem aus einem elastischen Werkstoff wie Gummi bestehenden und im wesentlichen ringscheibenförmigen Kupplungselement, welches im Bereich seines Innendurchmessers drehfest mit einer Kupplungsnabe und im Bereich seines Außendurchmessers über eine axial steckbare Verzahnung drehfest mit einem, eine Komplementärverzahnung aufweisenden Kupplungsring verbunden bzw. verbindbar ist.

Eine gattungsgemäße Kupplung, von der die Erfindung ausgeht, ist aus DE 29 42 874 A1 oder aus GB 1 352 565 bekannt und wird von der Anmelderin seit nunmehr über 25 Jahren in großen Stückzahlen hergestellt und vertrieben. Bei dieser Kupplung ist das gummielastische scheibenförmige Kupplungselement zwischen den beiden antriebs- bzw. abtriebsseitigen Kupplungsteilen, der Nabe einerseits und dem innenverzahnten Kupplungsring andererseits, angeordnet.

Die bekannte Kupplung hat sich insbesondere in schwierigen Einsatzfällen bestens bewährt. Derartige Einsatzfälle sind drehschwingungsbehaftete Antriebe, insbesondere mit Dieselmotoren, die häufig keinen runden Lauf haben und auch zu Zylinderaussetzern neigen. Dabei kommt es zu mitunter erheblichen Drehschwingungen auf der Antriebsseite der Kupplung und damit verbunden zu einer erhöhten Belastung des Kupplungselementes, welches die wechselnden Schwingungen von der Abtriebsseite, z.B. der Getriebewelle fernhalten sollen. Eine derartige erhöhte Belastung führt dazu, dass sich das Kupplungselement im Betrieb erhitzt. Mit steigenden Temperaturen verliert jedoch das Gummimaterial an Festigkeit, so dass unter solchen Betriebsbedingungen Funktion und Lebensdauer der Kupplung erheblich beeinträchtigt werden können.

Aus diesem Grunde werden Wellenkupplungen der genannten Art belüftet. Beispiele hierzu zeigt die bereits genannte DE 29 42 874 A1. Dabei ist insbesondere daran gedacht, in der Nabe zur Kupplungsdrehachse parallel, also axial ausgerichtete Luftdurchgangsbohrungen anzubringen, um so eine Lustzirkulation entlang den Kupplungsaußenflächen zu bewirken, wobei die abgehende Luft durch Zahnlücken im Bereich der Steckverbindung des Kupplungselements mit dem Kupplungsring ausströmen kann. Auch Leitbleche zur intensiveren Belüftung der Kupplung sind in DE 29 42 874 A1 (Fig. 4) offenbart, ebenso wie zusätzlich an den Außenflächen des gummielastischen Kupplungselements angeformte Luftleitschaufeln (Fig. 5). Derartige Maßnahmen sind jedoch relativ aufwendig und im Ergebnis nicht sehr effizient.

Der Erfindung liegt die Aufgabe zugrunde, eine Kupplung der als bekannt vorausgesetzten Gattung in geschickter Weise so zu gestalten, dass ihre Standfestigkeit und Belastbarkeit insbesondere bei wechselnden Antriebsmomenten deutlich verbessert ist.

Gelöst wird diese Aufgabe mit den Merkmalen des Anspruchs 1. Demzufolge ist die Erfindung dadurch gekennzeichnet, dass in dem Kupplungselement wenigstens eine in radialer Ebene verlaufende Ringspaltspaltanordnung ausgebildet ist, die das scheibenförmige Kupplungselement derart durchteilt, dass wenigstens zwei axial beabstandete Kupplungselement-Scheiben an der Kupplungsnabe als ihrem gemeinsamen Tragkörper befestigt sind und dass im Bereich der Ringspaltanordnung der Kupplungsnabe und dem Kupplungsring Luftführungsöffnungen zugeordnet sind, die mit der Ringspaltanordnung in luftleitender Verbindung stehen.

Im Unterschied zu dem eingangs geschilderte Stand der Technik entsprechend DE 29 42 874 A1 und deren Ausführungsbeispielen besteht der wesentliche Kern der Erfindung darin, die Luft zur Kühlung des gummielastischen Kupplungselementes nicht nur in erster Linie über dessen axialweisende Außenflächen zu führen, sondern außerdem radial von innen nach außen durch das Zentrum des scheibenförmigen Kupplungselementes hindurch. Dies trägt im besonderen Maße dem Umstand Rechnung, dass sich das gummielastische Element einer elastischen Kupplung namentlich im Innern besonders stark erhitzt. Diese dort durch Dämpfungsarbeit erzeugte Hitze abzuführen, wird mit den Mitteln der Erfindung in ausgezeichneter Weise erreicht.

In diesem Zusammenhang haben Versuche gezeigt, dass die erfindungsgemäß ausgestaltete Kupplung 70% mehr Verlustleistung abführen kann als eine Kupplung gleicher Baugröße ohne die erfinderische Ausgestaltung mit der Ringspaltanordnung.

Ausgehend vom genannten Stand der Technik stellt sich die Erfindung so dar, dass an einem einzigen Tragkörper - der Kupplungsnabe - zwei (oder auch mehr) Kupplungselemente in axialer Richtung luftspaltbeabstandet unmittelbar nebeneinander getrennt angeordnet sind. Die in einer Radialebene vorgesehene Ringspaltanordnung schwächt das Kupplungselement nicht. Die Ringspaltanordnung ist so ausgebildet, dass sich im Gummielement keine Spannungsspitzen oder sonstige, das Gummielement schädigenden Auswirkungen ergeben können.

Ein wesentlicher Vorteil der erfindungsgemäßen Kupplung besteht im übrigen auch darin, dass das nun quasi mehrteilige gummielastische Element in einem einzigen Herstellungsprozess mit dem zugehörigen Kupplungsteil vulkanisiert werden kann. Gewissermaßen erzielt man zwei parallel geschaltete Kupplungen. Deshalb lässt sich mit Hilfe der Erfindung der Einsatz größerer Kupplung oder echter Doppelkupplungen zur Behebung des eingangs genannten Problems vermeiden.

Auch bei Kupplungen nicht gattungsgemäßer Bauart sind vielfach Überlegungen angestellt worden, wie man die gummielastischen Körper im Betrieb der Kupplung durch geeignete Ausbildung von Luftkanälen und Führung des Belüftungsstromes zur Erhöhung ihrer Lebensdauer kühlen kann. Als ein Beispiel sei die DE 198 21 948 C2 genannt, bei der der Querschnitt des Elastomerkörpers radial von innen nach außen gesehen glockenförmig aufgeweitet ist, wobei Anschlussflansche dieser Kupplung, die konträr zur erfindungsgemäßen Kupplung eine solche mit axialem Kraftfluss ist, im äußeren Bereich relativ zueinander geschwungen nach außen hin aufgeweitet sind, so dass die axiale Breite des Elastomerkörpers radial von innen nach außen gesehen, zumindest abschnittsweise überproportional ansteigt. Diese bekannte Kupplung ist mit Kühlkanälen versehen, die axial durchgehend ausgebildet sind und mit Kühlfenstern in den Anschlussflanschen in luftleitender Verbindung stehen. Dadurch sind zwischen den Abschlussflanschen mehrere (im Ausführungsbeispiel vier) einzelne Elastomerkörper ringförmig ausgebildet und koaxial zur Kupplungsachse mit radialem Abstand voneinander angeordnet, wobei insbesondere daran gedacht ist, dass die Kühlkanäle in Umfangsrichtung durchgehend gestaltet sind.

Abgesehen davon, dass eine derartige Kupplung in ihrer Herstellung extrem aufwendig ist, besteht der wesentliche Nachteil in der achsparallelen Anordnung der um die Kupplungslängsachse angeordneten kreisringförmigen Kühlkanäle. Durch diese Kühlkanäle kann die Luft nur in Axialrichtung durchstreichen, weshalb im Betrieb der Kupplung der Luftdurchsatz äußerst minimal ist, da ein Druckgefälle fehlt, welches die Erfindung in geschickter Weise ausnutzt. Hier kann die Luft nahe der Drehachse der Kupplung im Bereich der Nabe angesaugt und durch die Drehbewegung der Kupplung im Betrieb nach außen befördert werden. Diese Luftführung ist aufgrund der außen höheren Umfangsgeschwindigkeit der Kupplung zwangsläufig.

Zudem ist die erfindungsgemäße Kupplung besonders einfach herzustellen, da lediglich Schwerter in die Vulkanisationsform eingegeben werden müssen, die an der Stelle sitzen, an der bei der fertigen Kupplung die Ringspaltanordnung ausgebildet ist.

Entsprechend weiterer Ausgestaltung des Erfindungsprinzips kann die Ringspaltanordnung Stege umfassen, die im wesentlichen radial verlaufen und mit der jeweils benachbarten Kupplungselement-Scheibe werkstoffeinheitlich-stoffschlüssig verbunden sind Dabei ist es vorteilhaft, wenn die radial verlaufenden Stege in Umfangsrichtung der Kupplung schmal sind im Verhältnis zu den zwischen ihnen gebildeten Ringspaltsegmenten. Die radiale Erstreckung der Radialstege kann im wesentlichen gleich der radialen Erstreckung der Kupplungselement-Scheiben sein.

Auch diese Kupplungsausführung ist sehr einfach herzustellen. Man muss in der Vulkanisationsform lediglich die weiter oben genannten Schwerter mit geringem Umfangsabstand zueinander anordnen und erhält so die Radialstege. Diese wirken bei der fertigen Kupplung im Betrieb wie Luftschaufeln, bewirken eine Erhöhung des Luftdurchsatzes und führen damit zu einer noch besseren Kühlung der Kupplung im Zentrum der gummielastischen Kupplungselement-Scheiben.

Im Sinne einfacher und geschickter Fertigung ist sodann vorgesehen, dass die Luftführungsöffnungen in der Kupplungsnabe in sich teilumfänglich erstreckende, axial ausgerichtete nutförmige Taschen münden, die jeweils zu wenigstens einer Axialseite der Nabe offen sind und eine radiale Tiefe aufweisen, deren Maß höchstens etwa der Hälfte der Naben-Wandstärke beträgt.

Bei diesen Ausgestaltungsmerkmalen handelt es sich um eine in der nachfolgenden Beschreibung eines Ausführungsbeispiels noch näher zu erläuternden Möglichkeit, in geschickter Weise die Luftführungskanäle im Nabenbereich der Kupplung auszubilden.

Im übrigen versteht sich die Erfindung am besten anhand eines in den Zeichnungen dargestellten Ausführungsbeispiels. Es zeigen:
- Fig. 1: eine Kupplung entsprechend der Erfindung in einem Halb-Längsschnitt,
- Fig. 2: eine Stirnansicht der Kupplung in Richtung des Ansichtspfeiles II der Fig. 1 und
- Fig. 3: eine schaubildliche Darstellung der erfindungsgemäßen Kupplung.

Die in ihrer Gesamtheit mit 10 bezeichnete hochdrehelastische Wellenkupplung besteht aus einer Nabe 11 als innerem Kupplungsteil und einem Kupplungsring 12 als äußerem Kupplungsteil, sowie einem dazwischen angeordneten, im wesentlichen kreisring- bzw. scheibenförmigen elastischen und vorzugsweise aus Gummi bestehenden Kupplungselement 13. In der Regel ist der Kupplungsring 12 der Antriebsseite und die Nabe 11 der Abtriebsseite der Kupplung 10 zugeordnet.

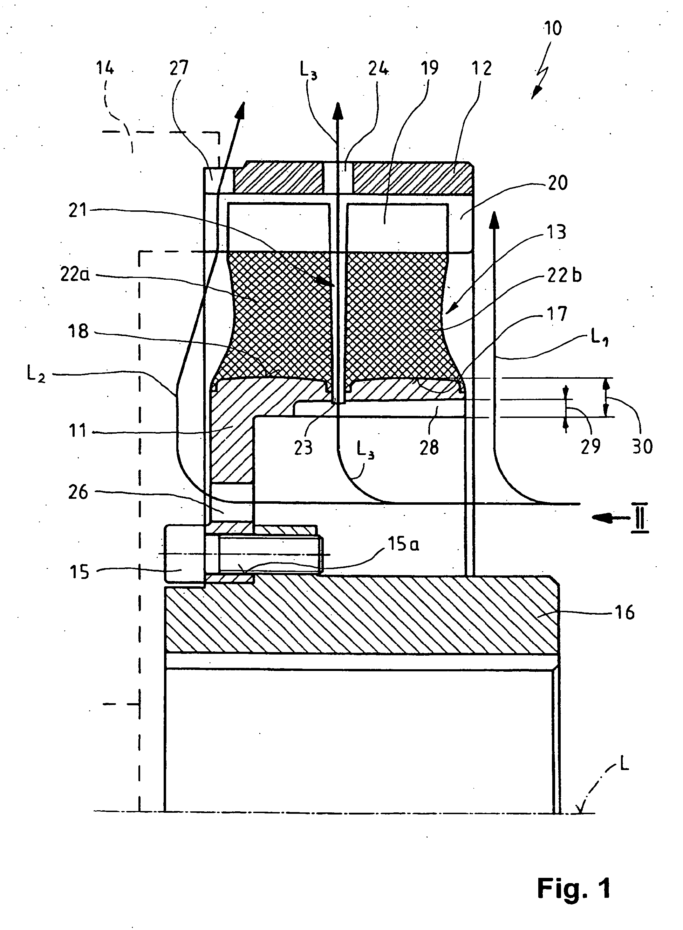

Mit strichpunktierten Linien lediglich angedeutet ist in Fig. 1 ein Schwungrad 14 eines Dieselmotors skizziert, an der das äußere Kupplungsteil 12 befestigt wird. Die Kupplungsnabe 11 ist über eine mittels Schraubbolzen 15 realisierte Verbindung an einer Wellennabe 16 befestigt.

Das gummielastische Kupplungselement 13 ist mit seiner Innenmantelfläche 17 an die Außenfläche 18 der Kupplungsnabe anvulkanisiert. Am Außenumfang weist das Kupplungselement 13 eine Vielzahl von Zähnen 19 auf, die mit komplementären Zähne 20 kämmend zusammenwirken, welche am Innenumfang des Kupplungsringes 12 ausgebildet sind. Das elastische Kupplungselement 13 ist zwischen Kupplungsnabe 11 und Kupplungsring 12 angeordnet.

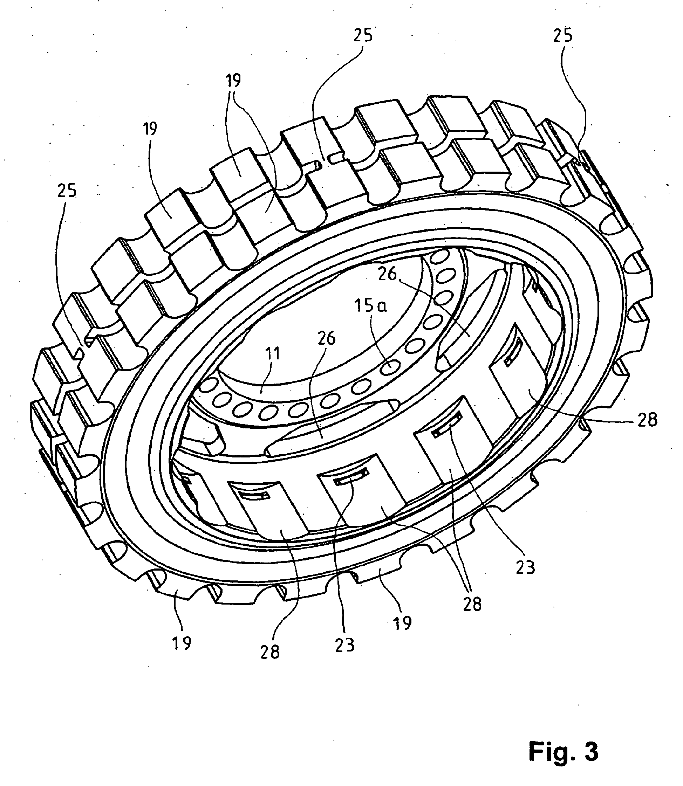

Die erfindungsgemäße Besonderheit der dargestellten und beschriebenen Kupplung 10 besteht nun darin, dass in dem Kupplungselement 13 wenigstens eine in radialer Ebene verlaufende Ringspaltanordnung 21 vorgesehen ist. Wie Fig. 1 und auch Fig. 3 deutlich zeigen, durchteilt diese Ringspaltanordnung 21 das scheibenförmige Kupplungselement 13 derart, dass wenigstens zwei axial beabstandete Kupplungselement-Scheiben 22a und 22b ausgebildet werden, die an der nicht bzw. nicht gänzlich durchbrochenen Kupplungsnabe 11 anvulkanisiert sind bzw. bleiben.

Diese Ringspaltanordnung 21 kann als ein einziger umlaufender Spalt in das Kupplungselement 13 eingearbeitet sein, z.B. eingefräst. In erster Linie ist jedoch daran gedacht, die Ringspaltanordnung 21 im Zuge der Vulkanisierung des Gummielements 13 mit der Kupplungsnabe 11 ohne besonderen Arbeitsschritt direkt mit zu erzeugen.

Abweichend von dem dargestellten Ausführungsbeispiel ist es selbstverständlich möglich, statt einer in einer radialen Ebene angeordneten Ringspaltanordnung auch zwei oder noch mehr solcher Ringspaltanordnungen vorzusehen, die dann in zueinander parallelen Ebenen im Kupplungselement 13 vorhanden wären.

Der Ringspaltanordnung 21 sind Luftführungsöffnungen 23 in der Kupplungsnabe 11 und 24 im Kupplungsring 12 zugeordnet. Bei den Luftführungsöffnungen 23 handelt es sich beim Ausführungsbeispiel um eine Vielzahl von in Umfangsrichtung der Kupplung beabstandeter schlitzförmiger Öffnungen, während die Luftführungsöffnungen 24 im Kupplungsring 12 Radialbohrungen sein können. Dies bezieht sich jedoch nur auf das dargestellte Ausführungsbeispiel; Abwandlungen sind hier selbstverständlich möglich, wenngleich es nicht im Sinne der Erfindung sein kann, wenn die Luftführungsöffnungen 23 und 24 in Umfangsrichtung ununterbrochen verlaufen würden, denn in diesem Falle würde die Kupplung auseinanderfallen.

Wie bereits ausgeführt, kann die wenigstens eine Ringspaltanordnung 21 ein in Umfangsrichtung unterbrechungsfrei umlaufender Ringspalt sein. Nach einer bevorzugten Ausführung der Erfindung ist jedoch vorgesehen, in vorzugsweise regelmäßigen Umfangsabständen radial verlaufende Rippen oder Stege 25 (Fig. 3) zwischen den Kupplungselement-Scheiben 22a und 22b auszubilden. Die radial verlaufenden Stege 25 sind mit den Kupplungselement-Scheiben 22a und 22b werkstoffeinheitlich-stoffschlüssig verbunden und in Radialrichtung gemessen vorzugsweise, wenngleich nicht zwingend, genauso lang wie die radiale Erstreckung des Kupplungselements 13, weisen aber nur eine sehr geringe Stärke bzw. Breite in Umfangsrichtung auf. Um eine praktikable Größenordnung zu vermitteln, sei erwähnt, dass bei einer im Versuch erfolgreich getesteten Kupplung mit einem Kupplungsnaben-Außendurchmesser von ca. 450 mm die in Umfangsrichtung gemessene Materialstärke der radial verlaufenden Stege etwa 10 mm beträgt.

Vorgesehen sind die radial verlaufenden Stege 25 beim Ausführungsbeispiel in sechsfacher Anordnung, d.h., alle 60° in Umfangsrichtung der Kupplung ist ein solcher Radialsteg 25 angeordnet.

Die Radialstege 25 wirken im Betrieb der Kupplung als Luftschaufeln und fördern somit die kühlende Strömung der Umgebungsluft durch das Zentrum des elastischen Kupplungsringes 13 hindurch.

In Fig. 1 ist die Belüftung der Kupplung durch Pfeillinien schematisch angedeutet. Ein erster Luftstrom L₁ kann entlang der in Fig. 1 nach rechts gerichteten axial weisenden Außenfläche der Kupplung streichen, ein zweiter, mit L₂ bezeichneter Luftstrom durch erste Belüftungsöffnungen 26 in der Kupplungsnabe 11 längs der anderen axialen Stirnseite der Kupplung und dann durch Lüftführungsöffnungen 27 im Kupplungsring 12 nach außen austreten.

Der im Sinne der Erfindung wesentliche Luftstrom L₃ verläuft jedoch durch das Zentrum des elastischen Kupplungsrings 13 hindurch, und zwar über Lufteintrittsöffnungen 23 in der Kupplungsnabe 11 und Luftaustrittsöffnungen 24 im Kupplungsring 12.

Eine konstruktive Besonderheit besteht in der Ausbildung der Lufteintrittsöffnungen 23 in der Kupplungsnabe 11. Geht man von der Überlegung aus, dass die Kupplungsnabe 11 einstückig bleiben soll, besteht eine technisch einfache Möglichkeit, die Luftführungsöffnungen 13 in den Mantel der Kupplungsnabe 11 einzubringen, in folgenden Merkmalen: In möglichst gleichmäßigen Umfangsabständen werden in die Gussstahlnabe 11 Taschen 28 eingegossen, die zur Kupplungslängsachse L und zu einer Stirnseite (in Fig. 1 nach rechts hin) offen sind. Die radiale Ausdehnung (Tiefe 29) der Taschen 28 ist geringer als die Wandstärke 30 der Kupplungsnabe 11 in diesem Bereich. Nun kann man den Rohling der Wellennabe 11 außenseitig derart überdrehen, dass der Drehstahl radial einwärts nur eben bis in die Taschen 28 vordringt, wodurch in der Wand der Nabe 11 (nur) im Bereich der Taschen schlitzförmige Luftführungsöffnungen 23 erzeugt sind.

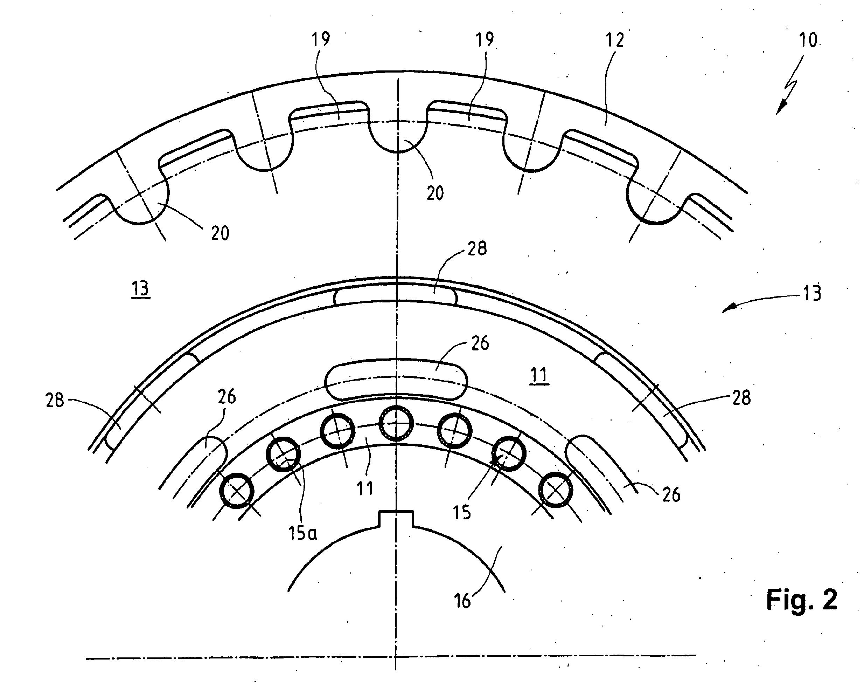

Fig. 2 zeigt dass die Luftführungsöffnungen 26 in der Kupplungsnabe 11 als sich jeweils über einen Teilumfangsbereich hinweg erstreckende Langlöcher ausgebildet sind. Das gleiche gilt für die sacklochartigen Taschen 28. Im übrigen zeigt Fig. 2 den Eingriff der Zähne 19 des gummielastischen Kupplungselements 13 in die Zahnlücken zwischen den Zähnen 20 des äußeren Kupplungsringes 12.

Fig. 3 veranschaulicht die über den Umfang der Kupplung verteilte Anordnung der Taschen 28 und der darin befindlichen Luftführungsöffnungen 23 besonders deutlich.

## Patentansprüche

1. Hoch drehelastische Wellenkupplung (10) für radialen Kraftfluss mit einem aus einem elastischen Werkstoff wie Gummi bestehenden und im wesentlichen ringscheibenförmigen Kupplungselement (13), welches im Bereich seines Innendurchmessers drehfest mit einer Kupplungsnabe (11) und im Bereich seines Außendurchmessers über eine axial steckbare Verzahnung drehfest mit einem, eine Komplementärverzahnung aufweisenden Kupplungsring (12) verbunden bzw. verbindbar ist, wobei das Kupplungselement (13) wenigstens eine in radialer Ebene verlaufende Ringspaltspaltanordnung (21) ist, die das scheibenförmige Kupplungselement (13) derart durchteilt, dass wenigstens zwei axial beabstandete Kupplungselement-Scheiben (22a, 22b) an der Kupplungsnabe (11) als ihrem gemeinsamen Tragkörper befestigt sind, wobei die Ringspaltanordnung (21) Stege (25) umfasst, die im wesentlichen radial verlaufen und wobei im Bereich der Ringspaltanordnung (21) der Kupplungsnabe (11) und dem Kupplungsring (12) Luftführungsöffnungen (23, 24) zugeordnet sind, die mit der Ringspaltanordnung (21) in luftleitender Verbindung stehen,
**dadurch gekennzeichnet, dass** das Kupplungselement (13) mittels Vulkanisation drehfest mit der Kupplungsnabe verbindbar ist, dass das Kupplugselement (13) einstückig ist, dass die Ringspaltanordnung (21) im kupplungselement (13) eingearbeitet ist und dass die Stege (25) mit der jeweils benachbarten Kupplungselementscheibe (22a; 22b) werkstoffeinheitlich-stoffschlüssig verbanden sind.

2. Wellenkupplung nach Anspruch 1, **dadurch gekennzeichnet, dass** die radial verlaufenden Stege (25) in Umfangsrichtung der Kupplung (10) schmal sind im Verhältnis zu den zwischen ihnen vorhandenen Ringspaltsegmenten.

3. Wellenkupplung nach Anspruche 1 oder 2, **dadurch gekennzeichnet, dass** die radiale Erstreckung der Stege (25) im wesentlichen gleich der radialen Erstreckung der Kupplungselement-Scheiben (22a, 22b) ist.

4. Wellenkupplung nach einem der vorhergehenden Ansprüche, **dadurch gekennzeichnet, dass** die Luftführungsöffnungen (23) in der Kupplungsnabe (11) in sich teilumfänglich erstreckende, axial ausgerichtete nutförmige Taschen (28) münden, die jeweils zu wenigstens einer Axialseite der Nabe (11) offen sind und eine radiale Tiefe aufweisen, deren Maß (29) höchstens etwa der Hälfte der Naben-Wandstärke (30) beträgt.

## Claims

1. Highly rotationally elastic shaft coupling (10) for a radial power flow, having a coupling element (13) which consists of an elastic material such as rubber and is substantially annular-disc-shaped and which is connected, or can be connected, in the region of its internal diameter, to a coupling hub (11) in a torsion-proof manner and, in the region of its external diameter, to a coupling ring (12) that has a complementary tooth system, in a torsion-proof manner via a tooth system that can be inserted axially, wherein there is present, in the coupling element (13), at least one annular-gap arrangement (21) which extends in a radial plane and which divides the disc-shaped coupling element (13) in such a way that at least two coupling-element discs (22a, 22b), which are spaced apart axially, are fastened to the coupling hub (11) as their common carrying body, wherein the annular-gap arrangement (21) comprises bars (25) which extend substantially radially, and wherein there are associated with the coupling hub (11) and the coupling ring (12), in the region of the annular-gap arrangement (21), air-guiding openings (23, 24) which are in air-conducting communication with said annular-gap arrangement (21),
**characterised in that** the coupling element (13) can be connected to the coupling hub in a torsion-proof manner by vulcanisation, that the coupling element (13) is in one piece, that the annular-gap arrangement (21) is incorporated into the coupling element (13), and that the bars (25) are connected, in the same material/with the materials integrally bonded, to the coupling-element disc (22a, 22b) which is adjacent in each case.

2. Shaft coupling according to claim 1, **characterised in that** the radially extending bars (25) are narrow in the peripheral direction of the coupling (10), compared to the annular-gap segments existing between them.

3. Shaft coupling according to claim 1 or 2, **characterised in that** the radial extension of the bars (25) is substantially equal to the radial extension of the coupling-element discs (22a, 22b).

4. Shaft coupling according to one of the preceding claims, **characterised in that** the air-guiding openings (23) in the coupling hub (11) open into axially oriented, groove-shaped pockets (28) which extend partly peripherally and which are open, in each case, to at least one axial side of the hub (11) and have a radial depth, the size (29) of which amounts, at most, to about half the wall thickness (30) of the hub.

## Revendications

1. Accouplement d'arbre à haute élasticité en rotation (10) pour un flux de force radial, avec un élément d'accouplement (13) pour l'essentiel en forme de disque annulaire et constitué d'une matière élastique comme de la gomme, lequel, dans la zone de son diamètre interne, est relié ou peut être relié en rotation à un moyeu d'accouplement (11) et dans la zone de son diamètre extérieur, par une denture pouvant être enfichée axialement, en rotation, à une bague d'accouplement (12) présentant une denture complémentaire, au moins un aménagement de fente annulaire (21) s'étendant dans un plan radial et qui divise l'élément d'accouplement (13) en forme de disque de telle sorte qu'au moins deux disques éléments d'accouplement (22a, 22b) espacés axialement sont fixés au moyeu d'accouplement (11) comme leur corps de support commun, étant dans l'élément d'accouplement (13), l'aménagement de fente annulaire (21) comprenant des barrettes (25) essentiellement radiales, et, dans la zone d'aménagement de fente annulaire (21), des ouvertures de guidage d'air (23, 24), reliées selon une liaison de guidage d'air à l'aménagement de fente annulaire (21), étant associées au moyeu d'accouplement (11) et à la bague d'accouplement (12), **caractérisé en ce que** l'élément d'accouplement (13) peut être relié en rotation au moyen d'une vulcanisation au moyeu d'accouplement, **en ce que** l'élément d'accouplement (13) est monobloc, **en ce que** l'aménagement de fente annulaire (21) est incorporé dans l'élément d'accouplement (13) et **en ce que** les barrettes (25) sont reliées de façon unitaire, par le matériau, ainsi qu'en constituant une liaison, par le matériau, aux disques éléments d'accouplement (22a, 22b) respectivement contigus.

2. Accouplement d'arbre selon la revendication 1, **caractérisé en ce que** les barrettes (25) radiales sont étroites dans le sens périphérique de l'accouplement (10), par rapport aux segments de fente annulaire présents entre elles (25).

3. Accouplement d'arbre selon la revendication 1 ou 2, **caractérisé en ce que** l'extension radiale des barrettes (25) est essentiellement identique à l'extension radiale des disques éléments d'accouplement (22a, 22b).

4. Accouplement d'arbre selon l'une des précédentes revendications, **caractérisé en ce que** les ouvertures de guidage d'air (23) débouchent, dans le moyeu d'accouplement (11), dans des poches (28) en forme de rainure, orientées axialement, s'étendant en partie circonférenciellement, ouvertes respectivement sur au moins un côté axial du moyeu (11) et présentant une profondeur radiale, dont la mesure (29) est au maximum à peu près la moitié de l'épaisseur de paroi du moyeu (30).
